# EUROPEAN PATENT APPLICATION

(11) **EP 4 819 540 A1**
(43) Date of publication of application: **07.10.2026**
(21) Application number: 24896131.0
(22) Date of filing: 29.10.2024
(51) Int. Cl.: H04L 9/40, H04L 9/06

(54) **DATA ENCRYPTION METHOD, DATA DECRYPTION METHOD, ELECTRONIC DEVICE AND MEDIUM**

(30) Priority: 30.11.2023 CN 202311629156
(71) Applicant: Roundtable Knights Technology Co., Ltd., Shanghai 200080 (CN)
(72) Inventor: LI, Feng, Shanghai 200080 (CN)
(74) Representative: Garavelli, Paolo
(86) International application number: PCT/CN2024/128061
(87) International publication number: WO 2025/113040

(57) **Abstract**

Disclosed in the present application are a data encryption method, a data decryption method, an electronic device and a medium. The encryption method comprises: acquiring plaintext data, and converting the plaintext data into data in a binary format, the data in the binary format comprising a data stream consisting of a plurality of pieces of m-bit data, and m being a positive integer; segmenting the data in the binary format to obtain segmented data, the segmented data comprising a plurality of pieces of (m-1)-bit data; acquiring a first conversion rule, the first conversion rule comprising a mapping relationship between 2m-1 pieces of continuous data and 2m pieces of continuous data; according to the first conversion rule, converting the segmented data into first converted data, the first converted data comprising a plurality of pieces of m-bit data; and, according to the first converted data, generating ciphertext data.

## Description

### Technical Field

The present invention relates to the field of information security technologies, and in particular to data encryption and decryption methods, an electronic device, and a medium.

### Background Art

Data encryption is one of the important aspects of data security, and may be applied to storage and transmission of data in various forms, such as messages, documents, and files. In data encryption, plaintext may be encrypted by adding interference, conversion, and other approaches.

Generally, plaintext may be encrypted by grouping. In related data encryption technologies, data of relatively large volume still has a relatively high risk of leakage.

### Summary

The present application provides data encryption and decryption methods, an electronic device, and a medium, which can improve the security of data encryption.

A first aspect of the present application discloses a data encryption method applied to an electronic device. The method comprises: obtaining plaintext data and converting the plaintext data into data in a binary format, wherein the data in the binary format comprises a data stream composed of a plurality of m-bit data items, wherein m is a positive integer; segmenting the data in the binary format to obtain segmented data, wherein the segmented data comprises a plurality of (m-1)-bit data items; obtaining a first conversion rule, wherein the first conversion rule comprises a mapping relationship between 2^{m-1} consecutive data items and 2^{m} consecutive data items; converting the segmented data into first converted data according to the first conversion rule, wherein the first converted data comprises a plurality of m-bit data items; and generating ciphertext data according to the first converted data.

In a possible implementation of the first aspect, the method further comprises preprocessing the data in the binary format. The preprocessing comprises: obtaining a second conversion rule, wherein the second conversion rule comprises a mapping relationship between different data items among 2^{m} consecutive data items; and converting the data in the binary format into second converted data according to the second conversion rule.

In a possible implementation of the first aspect, generating the ciphertext data according to the first converted data comprises: obtaining a third conversion rule, wherein the third conversion rule comprises a mapping relationship between different data items among 2^{m} consecutive data items; converting the first converted data into third converted data according to the third conversion rule; and generating the ciphertext data according to the third converted data.

In a possible implementation of the first aspect, converting the first converted data into the third converted data according to the third conversion rule comprises: sequentially numbering, in the first converted data, each data item in each data unit on a data-unit basis; updating, in each data unit, the number of each data item according to the third conversion rule; and reordering each data item according to the updated number to obtain the third converted data.

In a possible implementation of the first aspect, generating the ciphertext data according to the third converted data comprises: dividing the third converted data into a plurality of data units; selecting, according to a predetermined rule, one or more data items from each data unit among the plurality of data units to form a plurality of new data units; and combining the plurality of new data units to generate the ciphertext data.

In a possible implementation of the first aspect, m is an integer multiple of 4.

A second aspect of the present application discloses a data decryption method applied to an electronic device. The method comprises: obtaining ciphertext data, wherein the ciphertext data is in a binary format and comprises a data stream composed of a plurality of m-bit data items, wherein m is a positive integer; obtaining a first conversion rule, wherein the first conversion rule comprises a mapping relationship between 2^{m-1} consecutive data items and 2^{m} consecutive data items; converting the ciphertext data into segmented data according to the first conversion rule, wherein the segmented data is a plurality of (m-1)-bit data items; recombining the segmented data into recombined data, wherein the recombined data comprises a plurality of m-bit data items; and obtaining plaintext data based on the recombined data.

In a possible implementation of the second aspect, the method further comprises: obtaining a second conversion rule, wherein the second conversion rule comprises a mapping relationship between different data items among 2^{m} consecutive data items; and converting the recombined data into the plaintext data according to the second conversion rule.

In a possible implementation of the second aspect, the method further comprises: obtaining a third conversion rule, wherein the third conversion rule comprises a mapping relationship between different data items among 2^{m} consecutive data items; generating the third data according to the ciphertext data; and converting the third converted data into first converted data according to the third conversion rule.

In a possible implementation of the second aspect, converting the third converted data into the first converted data according to the third conversion rule comprises: sequentially numbering, in the third converted data, each data item in each data unit on a data-unit basis; updating, in each data unit, the number of each data item according to the third conversion rule; and reordering each data item according to the updated number to obtain the first converted data.

A third aspect of the present application discloses an electronic device. The device comprises a memory storing computer-executable instructions and a processor; when the instructions are executed by the processor, the device is caused to implement the method according to the first aspect and the second aspect of the present application.

A fourth aspect of the present application discloses a computer-readable medium. The storage medium stores one or more programs, and the one or more programs are executable by one or more processors to implement the method according to the first aspect and the second aspect of the present application.

A fifth aspect of the present application discloses a computer program product, comprising a computer program, wherein the computer program, when executed by a processor, implements the method according to the first aspect and the second aspect of the present application.

According to the data encryption and decryption methods, the electronic device, and the medium provided by the present application, after plaintext data is obtained, the plaintext data is converted into a machine-readable binary format. The converted data stream comprises a plurality of data units, and the length of each unit may correspond to half a byte or one byte. By segmenting the data, the data units are re-divided into data units having one fewer bit. The data in the new data units is then replaced by a conversion rule, and the number of bits therein is restored. In this way, after the original data units are segmented, the original data pattern can be cut off, and data complexity and security can be improved by a conversion mode involving bit-width expansion.

### Brief Description of the Drawings

FIG. 1 is a schematic flowchart of a data encryption method according to an embodiment of the present application.
FIGS. 2a-2b are visual schematic diagrams of a first conversion rule according to an embodiment of the present application.
FIGS. 3a-3b are visual schematic diagrams of a second conversion rule according to an embodiment of the present application.
FIG. 4 is a schematic flowchart of a data encryption method according to an embodiment of the present application.
FIG. 5 is a schematic flowchart of a data conversion method according to an embodiment of the present application.
FIG. 6 is a visual schematic diagram of the data conversion method of FIG. 5.
FIG. 7 is a schematic flowchart of a data encryption method according to an embodiment of the present application.
FIG. 8 is a schematic flowchart of a data decryption method according to an embodiment of the present application.
FIG. 9 is a block diagram of an electronic device according to an embodiment of the present application.

### Detailed Description of Embodiments

The present application is further described below with reference to specific embodiments and the accompanying drawings. It can be understood that illustrative embodiments of the present disclosure include, but are not limited to, data encryption and decryption methods, an electronic device, and a medium. The specific embodiments described herein are merely used to explain the present application, and are not intended to limit the present application. In addition, for ease of description, the drawings only show structures or processes related to the present application, rather than all structures or processes. The acquisition, storage, use, processing, and the like of data in the technical solution of the present application all comply with relevant provisions of national laws and regulations. To make the objectives, technical solutions, and advantages of the present application clearer, embodiments of the present application are described in further detail below with reference to the accompanying drawings.

In the field of encryption technologies, block cipher encryption is a mainstream file encryption approach. Its principle is to divide plaintext data into a plurality of blocks and perform encryption processing on each block as a unit. This encryption processing must be performed based on a fixed-length key. Due to the limitations of the block cipher principle, the key length is associated with the block size and is difficult to further increase. Therefore, the security level of a block cipher in the general sense, or what is referred to as encryption strength, is the length of the key. At present, the highest key length is 256 bits. Although this is generally recognized as secure, with the arrival of the post-quantum-computing era, the demand for higher encryption security levels will become increasingly urgent.

Taking AES, the most representative algorithm among block ciphers, as an example, AES groups plaintext, divides it into independent data blocks of fixed length (typically 128 or 256 bits in size), and then encrypts each data block independently. Although encryption directed to the data block itself is generally recognized as secure, this encryption mode cannot obfuscate the relationship between data blocks in terms of the overall structure, and some characteristics of the original plaintext are retained. As a consequence, an attacker may obtain some plaintext information from the ciphertext, or even obtain predictions of the plaintext.

Therefore, in practical applications, block cipher algorithms need to be implemented together with various modes. Currently, the most commonly used mode is AES-GCM. This mode can relatively efficiently solve the problem of obfuscating data in terms of the overall structure. However, for security reasons in the algorithm, this mode imposes a strict limitation on plaintext file size, namely, the plaintext file size must not exceed 2³² bytes, approximately 4.29 GB. As various file formats continue to increase in size with the development of the times, this problem will become increasingly prominent.

To solve the above problems, further improve encryption strength, obfuscate the overall file structure, and enable the encrypted file size to be unrestricted, an embodiment of the present application provides a data encryption method. After plaintext data is obtained, the plaintext data is converted into a machine-readable binary format. By segmenting the data, the data units are re-divided into data units having one fewer bit. The data in the new data units is then replaced by a conversion rule, and the number of bits therein is restored. After the original data units are segmented, the original data pattern can be cut off, and data complexity and security can be greatly improved through bit-width expansion conversion.

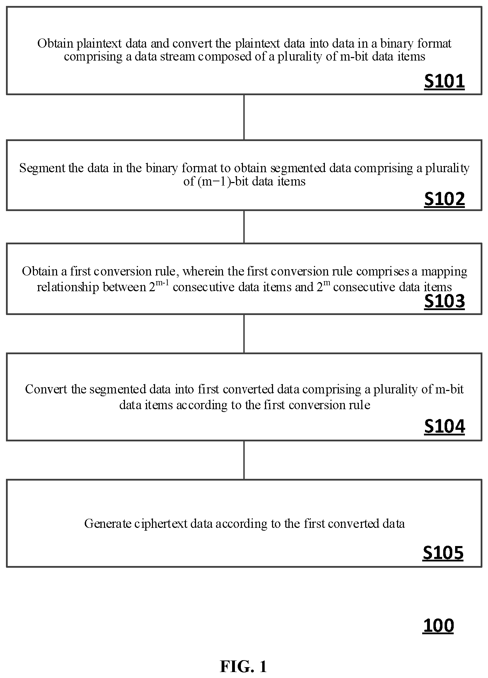

The details of an embodiment of the data encryption method according to the present application are described below with reference to FIG. 1. As shown in FIG. 1, a data encryption method 100 according to an implementation of the present application comprises the following steps.

In S101, plaintext data is obtained, and the plaintext data is converted into data in a binary format. The data in the binary format comprises a data stream composed of a plurality of m-bit data items.

The method 100 is applied to an electronic device. The electronic device may be one or more of a desktop computer, a laptop computer, a smart phone, a tablet computer, a server, an Internet-of-Things device, a chip, or a portable wearable device. The Internet-of-Things device may be one or more of an intelligent in-vehicle device, a smart television, a smart speaker, or a smart air conditioner. In some implementations, an application may be installed in the electronic device. The application comprises one or more of an application preconfigured in an operating system, an application that needs to be separately installed, and a program application that can be used without installation.

In some examples, forms of the plaintext data include, but are not limited to, one or more of characters, documents, images, audio, and video. The plaintext data is converted into data in a binary format for machine readability. The plaintext data may be encoded by using any encoding specification. In some examples, the encoding specification includes, but is not limited to, any one of ASCII (American Standard Code for Information Interchange), Unicode encoding, and UTF-8. For example, if the plaintext data comprises characters, each character may be converted into corresponding binary data according to ASCII; if the plaintext data comprises an image, a pixel value of each pixel may be converted into a binary data format.

The converted data in the binary format comprises a data stream of a plurality of m-bit data items, and m is a positive integer. For example, after binary conversion is performed on the letters in the word "knight," the letter "k" is converted into "0110 1011," the letter "n" is converted into "0110 1110," the letter "i" is converted into "0110 1001," the letter "g" is converted into "0110 0111," the letter "h" is converted into "0110 1000," and the letter "t" is converted into "0111 0100." In this example, each letter corresponds to a length of one byte (8 bits). Thus, the word "knight" is converted into the data stream "0110 1011 0110 1110 0110 1001 0110 0111 0110 1000 0111 0100." In some examples, m is an integer multiple of 4. For example, the word "knight" is converted into a data stream comprising twelve 4-bit data items or six 8-bit data items.

In S102, the data in the binary format is segmented to obtain segmented data, wherein the segmented data comprises a plurality of (m-1)-bit data items.

The plurality of m-bit data items obtained in S101 are sequentially segmented into a plurality of (m-1)-bit data items. For example, referring to Table 1, the data stream of twelve 4-bit data items in the above example may be segmented into a data stream of sixteen 3-bit data items. That is, by sequentially and continuously using 3 bits as a unit, the above data stream is converted into "011 010 110 110 111 001 101 001 011 001 110 110 100 001 110 100." Such segmentation can cut off the original data pattern.

**Table 1 Segmented Data Example 1**

| | | | | | | | | | | | | | | | | | | |
|---|---|---|---|---|---|---|---|---|---|---|---|---|---|---|---|---|---|---|
| **Before** | 0110 | 1 1011 | 0110 | | 1110 | 0110 | | 1001 | 0110 | | 0111 | | 0110 | 1000 | | 0111 | | 0100 |
| **After** | | 011 | 010 | 110 | 110 | 111 | 001 | 101 | 001 | 011 | 001 | 110 | 110 | 100 | 001 | 110 | 100 | |

In the above example, the data stream of twelve 4-bit data items can be exactly segmented into a data stream of sixteen 3-bit data items. If the length of the segmented data stream is not divisible by 3, data of the last unit may be padded in a predetermined manner. In some examples, zeros may be padded before the data of the last unit. For example, if the last unit of the segmented data stream is "10" or "1," the last unit may be padded to "010" or "001."

**Table 2 Segmented Data Example 2**

| | | | | | | | | | |
|---|---|---|---|---|---|---|---|---|---|
| **Before** | 0110 | 1011 | 01101110 | 01101001 | | 01100111 | 01101000 | | 01110100 |
| **After** | | 0110101 | 1011011 | 1001101 | 0010110 | 0111011 | 0100001 | 110100 | |

For example, in the example of S101, the word "knight" is converted into a data stream comprising six 8-bit data items, namely "01101011 01101110 01101001 01100111 01101000 01110100." Referring to Table 2, the data stream of six 8-bit data items may be converted into a plurality of 7-bit data streams, namely "0110101 1011011 1001101 0010110 0111011 0100001 110100," wherein "110100" in the last unit may be padded to "0110100."

In S103, a first conversion rule is obtained, wherein the first conversion rule comprises a mapping relationship between 2^{m-1} consecutive data items and 2^{m} consecutive data items.

The first conversion rule comprises a mapping relationship between 2^{m-1} consecutive data items and 2^{m} consecutive data items. That is, 2^{m-1} different data items may be respectively mapped to 2^{m-1} different data items among the 2^{m} data items. For example, the segmented data units in S102 are (m-1)-bit data items, corresponding to 2^{m-1} possible data items. By using the first conversion rule, the possible 2^{m-1} data items in the segmented data units may be replaced with random 2^{m-1} possible data items among 2^{m} data items.

**Table 3 Example of the First Conversion Rule**

| | | | | | | | | |
|---|---|---|---|---|---|---|---|---|
| **Before** | 0 | 1 | 2 | 3 | 4 | 5 | 6 | 7 |
| **After** | 8 | B | 0 | 9 | D | 6 | E | 4 |

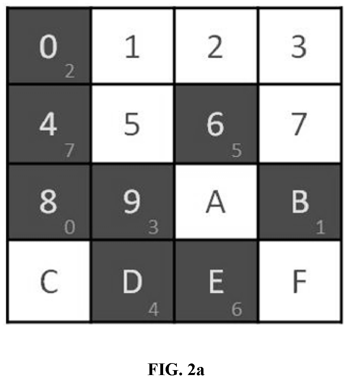

Table 3 shows an example of the first conversion rule, in which data numbered 0 to (2^{m-1}-1) are mapped to data numbered 0 to (2^{m}-1). In Table 3, m=4, and the segmented data units are 3-bit data items, corresponding to 2³ possible data items. In Table 3, eight data items are replaced with random eight data items among sixteen data items. For clarity of description, the converted data is represented in hexadecimal. For better illustration, FIG. 2a shows a visual example of the first conversion rule in Table 3 of the present application. FIG. 2a shows a grid composed of 4×4, namely 16 small squares, wherein each small square is represented by a hexadecimal number from 0 - F. The first conversion rule may be equivalent to randomly selecting eight small squares (gray background) from the sixteen small squares and randomly numbering the eight small squares from 0 to 7 (see the lower-right subscript). The first conversion rule in FIG. 2a is merely an example. It can be understood that the first conversion rule may be randomly generated, and the number of possibilities of the first conversion rule is 16!/(16-8)!.

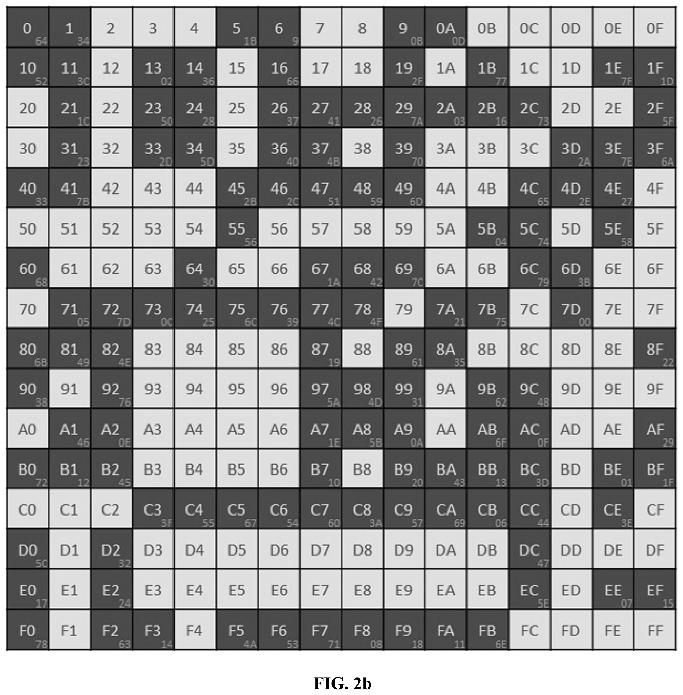

When m=8, the first conversion rule is used to respectively map 2⁷ different data items to 2⁷ different data items among 2⁸ data items. FIG. 2b shows another visual example of the first conversion rule of the present application.

FIG. 2b shows a grid composed of 16×16, namely 256 small squares, wherein each small square is represented by a hexadecimal number from 0 - FF. The first conversion rule may be equivalent to randomly selecting 128 small squares (gray background) from the 256 small squares and randomly numbering the 128 small squares (see the lower-right subscript). The first conversion rule in FIG. 2b is merely an example. It can be understood that the first conversion rule may be randomly generated, and the number of possibilities of the first conversion rule is 256!/(256-128)!.

In S104, the segmented data is converted into first converted data according to the first conversion rule, wherein the first converted data comprises a plurality of m-bit data items.

According to the first conversion rule in S103, the segmented data obtained in S102 may be converted into the first converted data. Although each data unit in the segmented data comprises (m-1)-bit data, after replacement by the first conversion rule, each data unit comprises m-bit data.

Through conversion from (m-1) bits to m bits in a data unit, the data possibilities of each data unit expand from 2^{m-1} to 2^{m}. For example, when m=4, the possibilities of each data unit expand from 8 to 16, so that additional data information is mixed into the original data. Such additional data information is unrelated to the plaintext data, but can improve encryption protection for the data.

In addition, with respect to replacement of each data unit, the number of possible replacements increases from (2^{m-1})! to (2^{m})!/(2^{m}-2^{m-1})!, greatly increasing the complexity of replacement. For example, when m=4, the data possibilities of each data unit increase from 8! (40320) to 16!/(16-8)! (518918400).

In S105, ciphertext data is generated according to the first converted data.

Through the conversion, segmentation, and replacement in S101 to S104, the plaintext data is converted into ciphertext data. It can be understood that the respective steps in the method 100 are not limited to being performed in the order of the reference numerals.

In the method 100, after plaintext data is obtained, the plaintext data is converted into a machine-readable binary format. The converted data stream comprises a plurality of data units, and the length of each unit may correspond to half a byte or one byte. By segmenting the data, the data units are re-divided into data units having one fewer bit. The data in the new data units is then replaced by a conversion rule, and the number of bits therein is restored. In this way, after the original data units are segmented, the original data pattern can be cut off, and data complexity and security can be greatly improved by bit-width expansion conversion.

In some implementations, the encryption method of the present application may further preprocess the data in the binary format. The preprocessing process comprises replacing the data before segmentation according to a predetermined rule.

In the predetermined rule for the preprocessing, namely the second conversion rule, a mapping relationship between 2^{m} consecutive data items and 2^{m} consecutive data items is included, that is, a mapping relationship between different data items among 2^{m} consecutive data items is included. 2^{m} different data items may be respectively mapped to different data items among the 2^{m} data items. By using the second conversion rule, possible 2^{m} data items in each data unit may be replaced. In other words, in the second conversion rule, internal permutation is performed on each data item.

**Table 4 Example of the Second Conversion Rule**

| | | | | | | | | | | | | | | | | |
|---|---|---|---|---|---|---|---|---|---|---|---|---|---|---|---|---|
| **Before** | 0 | 1 | 2 | 3 | 4 | 5 | 6 | 7 | 8 | 9 | A | B | C | D | E | F |
| **After** | F | 3 | 9 | 7 | 2 | B | D | A | 1 | 5 | 4 | 6 | 8 | E | 0 | C |

Table 4 shows an example of the second conversion rule, in which data numbered 0 to (2^{m}-1) are mapped to data numbered 0 to (2^{m}-1). In Table 4, m=4, which means that internal permutation is performed on 16 data items.

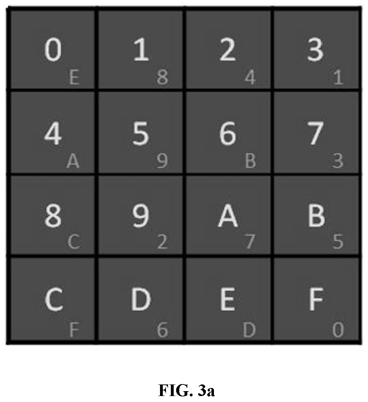

For better illustration, FIG. 3a shows a visual example of the second conversion rule in Table 4 of the present application. FIG. 3a shows a grid composed of 4×4, namely 16 small squares, wherein each small square is represented by a hexadecimal number from 0 - F. The second conversion rule may be equivalent to selecting all of the sixteen small squares (gray background) and randomly numbering the sixteen small squares from 0 - F (see the lower-right subscript). The second conversion rule in FIG. 3a is merely an example. It can be understood that the second conversion rule may be randomly generated, and the number of possibilities of the second conversion rule is 16!.

When m=4, for an encryption process subjected to preprocessing, namely processing through the first conversion rule and the second conversion rule, in a case of brute-force cracking, (16!/(16-8)!)×16! ≈ 2⁷³ possibilities need to be exhaustively enumerated.

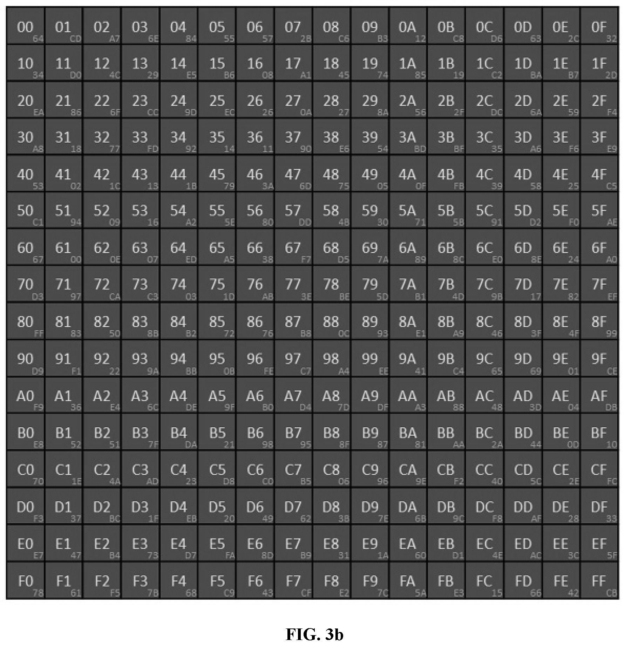

FIG. 3b shows a visual example of the second conversion rule according to an embodiment of the present application. FIG. 3b shows a grid composed of 16×16, namely 256 small squares, wherein each small square is represented by a hexadecimal number from 0 - FF. The second conversion rule may be equivalent to selecting all of the 256 small squares (gray background) and randomly numbering the 256 small squares from 0 - FF (see the lower-right subscript). In the case of FIG. 3b, m=8, and the second conversion rule is used to internally permute 2⁸ different data items. In this case, the number of possibilities of the second conversion rule is 256!. Similarly, for processing through the first conversion rule and the second conversion rule, in a case of brute-force cracking, (256!/(256-128)!)×256! ≈ 2²⁶⁵⁶ possibilities need to be exhaustively enumerated.

Therefore, this encryption process encrypts the plaintext data as a whole, rather than encrypting respective data blocks. The preprocessing process can not only cut off a specific mathematical relationship between the plaintext data and the ciphertext data, but also greatly improve resistance to brute-force cracking.

In some implementations, generating the ciphertext data according to the first converted data may comprise performing permutation processing on the first converted data according to a predetermined conversion rule. This process may be similar to the above preprocessing process. That is, the permutation processing of the first converted data may comprise the following steps: obtaining a third conversion rule, wherein the third conversion rule comprises a mapping relationship between different data items among 2^{m} consecutive data items; converting the first converted data into third converted data according to the third conversion rule; and generating the ciphertext data according to the third converted data.

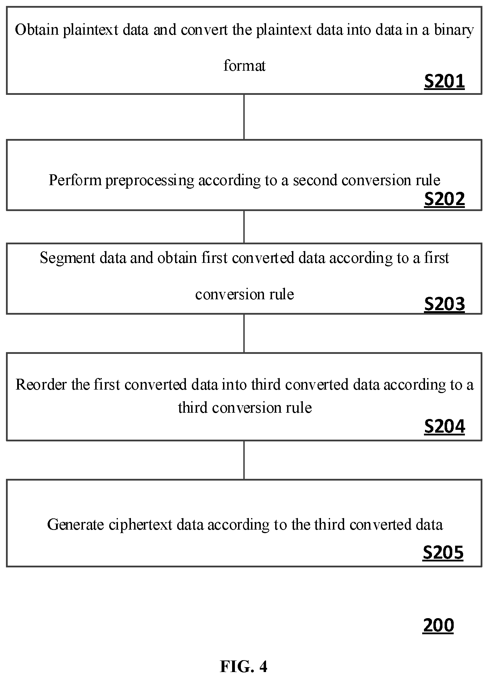

FIG. 4 shows a schematic flowchart of a data encryption method 200 according to an embodiment of the present application. The respective steps therein are described below.

In S201, plaintext data is obtained, and the plaintext data is converted into data in a binary format.

It can be understood that this step is similar to S101, and details are not repeated herein.

In S202, preprocessing is performed according to the second conversion rule.

For the converted data in the binary format, internal permutation may be performed according to the second conversion rule, with reference to the examples in FIG. 3a and Table 4.

In S203, data is segmented, and first converted data is obtained according to the first conversion rule.

For the preprocessed data, the number of bits of the data unit may be segmented to have one fewer bit according to S102 to S103, and the segmented data is then replaced according to the first conversion rule to obtain the first converted data.

In S204, the first converted data is reordered into third converted data according to the third conversion rule.

For the first converted data, a processing approach similar to that in S202 may be adopted, so that the first converted data is internally permuted into third converted data. The third conversion rule may be randomly generated with reference to the example in Table 4. In some examples, the third conversion rule may be the same as the second conversion rule, so as to improve data security and data encryption efficiency. In some examples, the third conversion rule may be different from the second conversion rule, so as to greatly improve resistance to brute-force cracking.

In S205, ciphertext data is generated according to the third converted data.

In some implementations, the third converted data may be directly used as the ciphertext data. In some other implementations, the third converted data may be rearranged to generate the ciphertext data.

In the method 200, the plaintext data undergoes preprocessing replacement, data segmentation and replacement, and data reordering, so that data security can be greatly improved.

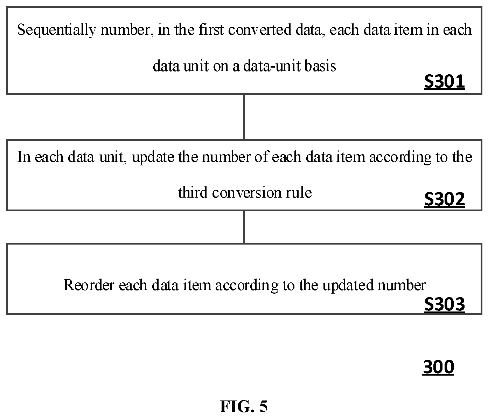

FIG. 5 shows a schematic flowchart of a data conversion method 300 according to an embodiment of the present application. The method 300 comprises the following steps.

In S301, in the first converted data, each data item in each data unit is sequentially numbered on a data-unit basis.

The first converted data is divided on a data-unit basis. For example, as described above, the first converted data comprises a plurality of m-bit data items, and 2ⁿ m-bit data items may be taken as one data unit, wherein n is a positive integer. The specific values of m and n herein may be determined as required, and the values of m and n may be equal or different. For example, m=4 and n=3 or 4; or m=8 and n is any one of 3, 4, 7, or 8. The data items in each data unit are sequentially numbered. For example, in each data unit, the numbering may be from 0 to (2ⁿ-1).

In S302, in each data unit, the number of each data item is updated according to the third conversion rule.

Since the third conversion rule comprises a mapping relationship of 2^{m} consecutive data items, the number of each data item may be converted according to the third conversion rule to obtain an updated number.

In S303, each data item is reordered according to the updated number.

Each data item is reordered according to the updated number of each data item.

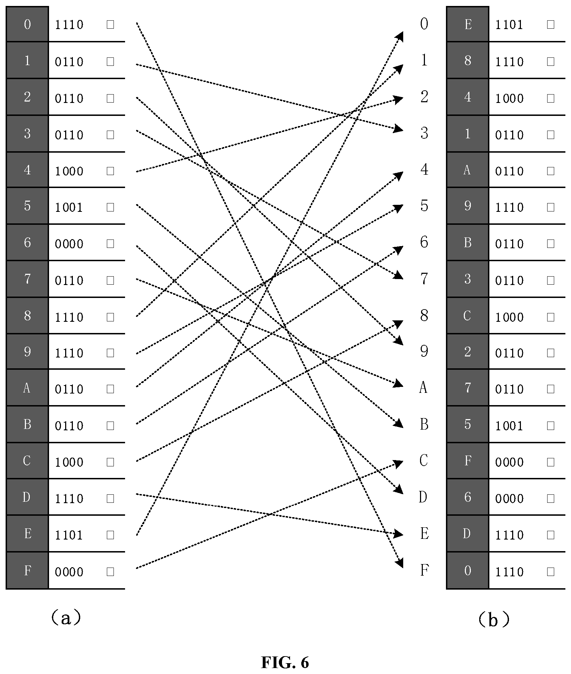

FIG. 6 shows a visual schematic diagram of the method 300 in FIG. 5. In FIG. 6, the first converted data is a data stream of "1110 0110 ... 0000 ...." Part (a) of FIG. 6 shows that the first converted data is divided into a plurality of data units in units of 2ⁿ, wherein n=4. In the first data unit, "1110 0110 ... 0000" is sequentially numbered from 0 - F. By analogy, similar numbering processing is performed on subsequent data units.

The third conversion rule in FIG. 6 refers to the example of FIG. 3a (Table 4). According to FIG. 3a, data originally numbered 0 has an updated number of F. The updated F can be directly determined from the subscript 0 according to the index in FIG. 3a. For other numbers, the updated value can likewise be indexed according to the corresponding subscript.

In part (b) of FIG. 6, sorting is performed again according to the updated numbers in the order from 0 - F, and the generated data stream is "1101 1000 ... 1110 ...." As can be seen from FIG. 6, after the plurality of m-bit data items of the first converted data are position-converted according to the third conversion rule, the complexity of the ciphertext data can be increased.

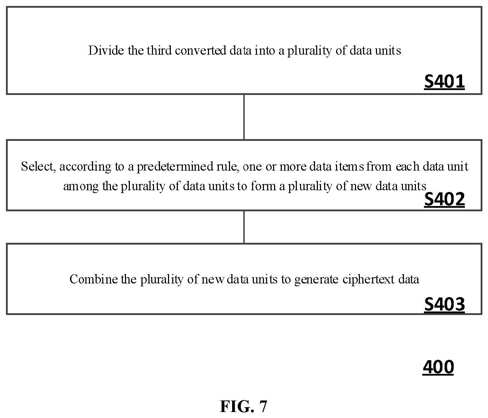

FIG. 7 shows a schematic flowchart of a data encryption method 400 according to an embodiment of the present application.

In S401, the third converted data is divided into a plurality of data units.

Referring to the example in part (b) of FIG. 6, the rearranged data, namely the third converted data "1101 1000 ... 1110 ...," may be divided into a plurality of data units. For example, the third converted data may be sequentially divided, in units of 8 or 16, into a plurality of data units composed of sixteen 4-bit data items.

In S402, according to a predetermined rule, one or more data items are selected from each data unit among the plurality of data units to form a plurality of new data units.

In part (b) of FIG. 6, data items with the same number in each data unit may be selected, for example, data items numbered 0 in the first, second, third, and subsequent data units. Alternatively, data items with adjacent numbers in each data unit may be selected, for example, data items numbered 0 and 1 in the first, second, third, and subsequent data units. The present application does not limit the manner of selecting data in a data unit, and various other manners may be adopted. By analogy, until all data in the data units are selected, a plurality of new data units are formed.

In S403, the plurality of new data units are combined to generate ciphertext data.

The new data units are combined to generate ciphertext data. For example, in part (b) of FIG. 6, the ciphertext data may be generated from left to right in row order. The present application does not limit the manner of combining data units, and various other manners may be adopted.

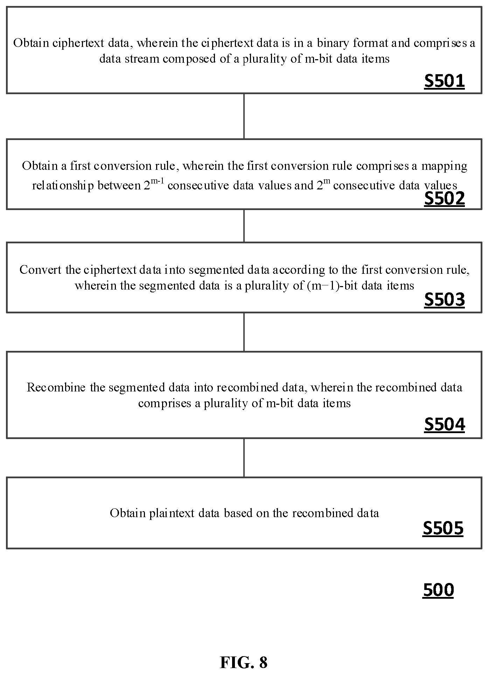

The present application further discloses a data decryption method 500, corresponding to the encryption method 100, which is now described with reference to FIG. 8.

In S501, ciphertext data is obtained, wherein the ciphertext data is in a binary format and comprises a data stream composed of a plurality of m-bit data items, wherein m is a positive integer.

In S502, a first conversion rule is obtained, wherein the first conversion rule comprises a mapping relationship between 2^{m-1} consecutive data items and 2^{m} consecutive data items.

In S503, the ciphertext data is converted into segmented data according to the first conversion rule, wherein the segmented data is a plurality of (m-1)-bit data items.

In S504, the segmented data is recombined into recombined data, wherein the recombined data comprises a plurality of m-bit data items.

In S505, plaintext data is obtained based on the recombined data.

It can be understood that the method 500 and the method 100 are mutually reversible, and the respective steps in the method 500 are inverse steps of the respective steps in the method 100. The following describes examples.

When the method 100 comprises the preprocessing step, the method 500 further comprises: obtaining a second conversion rule, wherein the second conversion rule comprises a mapping relationship between different data items among 2^{m} consecutive data items; and converting the recombined data into plaintext data according to the second conversion rule.

In some implementations, when generating the ciphertext data according to the first converted data in the method 100 comprises performing permutation processing on the first converted data according to a predetermined conversion rule, the method 500 may further comprise the following steps: obtaining a third conversion rule, wherein the third conversion rule comprises a mapping relationship between different data items among 2^{m} consecutive data items; generating third converted data according to the ciphertext data; and converting the third converted data into first converted data according to the third conversion rule.

In some implementations, when the method 100 comprises reordering the first converted data, the method 500 may further comprise the following steps: sequentially numbering, in the third converted data, each data item in each data unit on a data-unit basis; updating, in each data unit, the number of each data item according to the third conversion rule; and reordering each data item according to the updated number to obtain the first converted data.

It can be understood that the method 500 may further comprise inverse steps of other steps in the method 100, and details are not repeated herein.

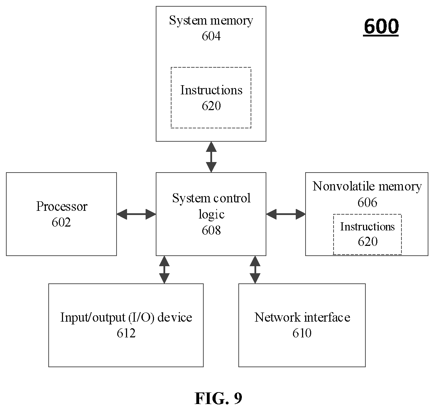

Reference is now made to FIG. 9. FIG. 9 is a block diagram of an electronic device 600 according to an embodiment of the present application. The electronic device 600 may comprise one or more processors 602, system control logic 608 connected to at least one of the processors 602, system memory 604 connected to the system control logic 608, nonvolatile memory (NVM) 606 connected to the system control logic 608, and a network interface 610 connected to the system control logic 608.

The processor 602 may comprise one or more single-core or multi-core processors. The processor 602 may comprise any combination of general-purpose processors and special-purpose processors (for example, graphics processors, application processors, baseband processors, and the like). In the embodiments described herein, the processor 602 may be configured to perform one or more embodiments according to the various embodiments shown in FIGS. 1 to 8.

In some embodiments, the system control logic 608 may comprise any suitable interface controller to provide any suitable interface to at least one of the processors 602 and/or to any suitable device or component in communication with the system control logic 608.

In some embodiments, the system control logic 608 may comprise one or more memory controllers to provide an interface connected to the system memory 604. The system memory 604 may be used for loading and storing data and/or instructions. In some embodiments, the memory 604 of the device 600 may comprise any suitable volatile memory, such as suitable dynamic random access memory (DRAM).

The NVM/storage 606 may comprise one or more tangible, non-transitory computer-readable media for storing data and/or instructions. In some embodiments, the NVM/storage 606 may comprise any suitable nonvolatile memory, such as flash memory, and/or any suitable nonvolatile storage device, for example, at least one of an HDD (Hard Disk Drive), a CD (Compact Disc) drive, or a DVD (Digital Versatile Disc) drive.

The NVM/storage 606 may comprise part of storage resources installed on an apparatus of the device 600, or may be accessible by the device but not necessarily part of the device. For example, the NVM/storage 606 may be accessed via a network through the network interface 610.

In particular, the system memory 604 and the NVM/storage 606 may respectively comprise a temporary copy and a permanent copy of instructions 620. The instructions 620 may comprise instructions that, when executed by at least one of the processors 602, cause the device 600 to implement the methods shown in FIGS. 1, 4 to 5, and 7 to 8. In some embodiments, the instructions 620, hardware, firmware, and/or software components thereof may additionally/alternatively be placed in the system control logic 608, the network interface 610, and/or the processor 602.

In one embodiment, at least one of the processors 602 may be packaged together with logic for one or more controllers of the system control logic 608 to form a system-in-package (SiP). In one embodiment, at least one of the processors 602 may be integrated on the same die with logic for one or more controllers of the system control logic 608 to form a system on chip (SoC).

The method implementations of the present application may all be implemented in software, magnetic components, firmware, or the like.

Program code may be applied to input instructions to perform the functions described herein and generate output information. The output information may be applied to one or more output devices in a known manner. For the purposes of the present application, a processing system comprises any system having a processor such as, for example, a digital signal processor (DSP), a microcontroller, an application-specific integrated circuit (ASIC), or a microprocessor.

The program code may be implemented in a high-level procedural language or an object-oriented programming language for communication with the processing system. When necessary, the program code may also be implemented in assembly language or machine language. In fact, the mechanisms described herein are not limited to the scope of any particular programming language. In any case, the language may be a compiled language or an interpreted language.

One or more aspects of at least one embodiment may be implemented by representative instructions stored on a computer-readable storage medium. The instructions represent various logic in a processor, and when read by a machine, cause the machine to fabricate logic for performing the techniques described herein. Such representations, referred to as "IP cores," may be stored on a tangible computer-readable storage medium and provided to multiple customers or production facilities to be loaded into manufacturing machines that actually fabricate the logic or processor.

An embodiment of the present application discloses a computer-readable medium storing one or more programs executable by one or more processors to implement the method of the present application.

An embodiment of the present application discloses a computer program product comprising a computer program, wherein the computer program, when executed by a processor, implements the method of the present application.

The embodiments of the present application are described above by specific embodiments. A person skilled in the art can readily understand other advantages and effects of the present application from the disclosure of this specification. Although the description of the present application is introduced in conjunction with preferred embodiments, this does not mean that the features of the invention are limited only to the implementations. To provide an in-depth understanding of the present application, many specific details are included in the above description. The present application may also be implemented without these details. In addition, to avoid confusion or obscuring the focus of the present application, some specific details are omitted from the description. It should be noted that, where no conflict occurs, the embodiments in the present application and the features in the embodiments may be combined with each other.

Furthermore, various operations are described as a plurality of discrete operations in a manner that is most helpful for understanding illustrative embodiments; however, the order of description should not be construed as implying that these operations must be order-dependent. In particular, these operations need not be performed in the order presented.

Unless otherwise specified by the context, the terms "comprise," "have," and "include" are synonymous. The phrase "A/B" means "A or B." The phrase "A and/or B" means "(A and B) or (A or B)."

In some cases, the disclosed embodiments may be implemented in hardware, firmware, software, or any combination thereof. The disclosed embodiments may also be implemented as instructions carried by or stored on one or more transitory or non-transitory machine-readable (for example, computer-readable) storage media, and the instructions may be read and executed by one or more processors. For example, the instructions may be distributed through a network or by way of other computer-readable media. Therefore, a machine-readable medium may comprise any mechanism for storing or transmitting information in a form readable by a machine (for example, a computer). Thus, a machine-readable medium comprises any type of machine-readable medium suitable for storing or transmitting electronic instructions or information in a form readable by a machine (for example, a computer).

It should be understood that although terms such as "first" and "second" may be used herein to describe various units or data, these units or data should not be limited by these terms. These terms are used merely to distinguish one feature from another feature. It should be noted that, in this specification, similar reference numerals and letters indicate similar items in the following drawings. Therefore, once an item is defined in one drawing, it need not be further defined or explained in subsequent drawings.

Although the present invention has been illustrated and described with reference to certain preferred embodiments thereof, a person of ordinary skill in the art should understand that various changes in form and detail may be made thereto without departing from the spirit and scope of the present invention.

## Claims

1. A data encryption method applied to an electronic device, wherein the method comprises:
obtaining plaintext data and converting the plaintext data into data in a binary format, wherein the data in the binary format comprises a data stream composed of a plurality of m-bit data items, wherein m is a positive integer;
segmenting the data in the binary format to obtain segmented data, wherein the segmented data comprises a plurality of (m-1)-bit data items;
obtaining a first conversion rule, wherein the first conversion rule comprises a mapping relationship between 2^{m-1} consecutive data items and 2^{m} consecutive data items;
converting the segmented data into first converted data according to the first conversion rule, wherein the first converted data comprises a plurality of m-bit data items; and
generating ciphertext data according to the first converted data.

2. The method according to claim 1, further comprising preprocessing the data in the binary format, wherein the preprocessing comprises:
obtaining a second conversion rule, wherein the second conversion rule comprises a mapping relationship between different data items among 2^{m} consecutive data items; and
converting the data in the binary format into second converted data according to the second conversion rule.

3. The method according to claim 1, wherein generating the ciphertext data according to the first converted data comprises:
obtaining a third conversion rule, wherein the third conversion rule comprises a mapping relationship between different data items among 2^{m} consecutive data items;
converting the first converted data into third converted data according to the third conversion rule; and
generating the ciphertext data according to the third converted data.

4. The method according to claim 3, wherein converting the first converted data into the third converted data according to the third conversion rule comprises:
sequentially numbering, in the first converted data, each data item in each data unit on a data-unit basis;
updating, in each data unit, the number of each data item according to the third conversion rule; and
reordering each data item according to the updated number to obtain the third converted data.

5. The method according to claim 3, wherein generating the ciphertext data according to the third converted data comprises:
dividing the third converted data into a plurality of data units;
selecting, according to a predetermined rule, one or more data items from each data unit among the plurality of data units to form a plurality of new data units; and
combining the plurality of new data units to generate the ciphertext data.

6. The method according to claim 1, wherein m is an integer multiple of 4.

7. A data decryption method applied to an electronic device, wherein the method comprises:
obtaining ciphertext data, wherein the ciphertext data is in a binary format and comprises a data stream composed of a plurality of m-bit data items, wherein m is a positive integer;
obtaining a first conversion rule, wherein the first conversion rule comprises a mapping relationship between 2^{m-1} consecutive data items and 2^{m} consecutive data items;
converting the ciphertext data into segmented data according to the first conversion rule, wherein the segmented data is a plurality of (m-1)-bit data items;
recombining the segmented data into recombined data, wherein the recombined data comprises a plurality of m-bit data items; and
obtaining plaintext data based on the recombined data.

8. The method according to claim 7, further comprising:
obtaining a second conversion rule, wherein the second conversion rule comprises a mapping relationship between different data items among 2^{m} consecutive data items; and
converting the recombined data into the plaintext data according to the second conversion rule.

9. The method according to claim 7, further comprising:
obtaining a third conversion rule, wherein the third conversion rule comprises a mapping relationship between different data items among 2^{m} consecutive data items;
generating the third data according to the ciphertext data; and
converting the third converted data into first converted data according to the third conversion rule.

10. The method according to claim 9, wherein converting the third converted data into the first converted data according to the third conversion rule comprises:
sequentially numbering, in the third converted data, each data item in each data unit on a data-unit basis;
updating, in each data unit, the number of each data item according to the third conversion rule; and
reordering each data item according to the updated number to obtain the first converted data.

11. An electronic device, wherein the device comprises a memory storing computer-executable instructions and a processor; when the instructions are executed by the processor, the device is caused to implement the method according to any one of claims 1 to 10.

12. A computer-readable storage medium, wherein the storage medium stores one or more programs, and the one or more programs are executable by one or more processors to implement the method according to any one of claims 1 to 10.

13. A computer program product, comprising a computer program, wherein the computer program, when executed by a processor, implements the method according to any one of claims 1 to 10.
